(19) Europäisches Patentamt
European Patent Office
Office européen des brevets

(11) **EP 2 482 506 A1**

(12) **EUROPEAN PATENT APPLICATION**
published in accordance with Art. 153(4) EPC

(43) Date of publication:
**01.08.2012 Bulletin 2012/31**

(51) Int Cl.:
**H04L 25/00** (2006.01)

(21) Application number: **10788700.2**

(22) Date of filing: **21.04.2010**

(86) International application number:
**PCT/CN2010/071999**

(87) International publication number:
**WO 2010/145304 (23.12.2010 Gazette 2010/51)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.09.2009 CN 200910190604**

(71) Applicant: **ZTE Corporation**
**Shenzhen, Guangdong 518057 (CN)**

(72) Inventor: **CHENG, Jian**
**Shenzhen**
**Guangdong 518057 (CN)**

(74) Representative: **Jansen, Cornelis Marinus et al**
**VEREENIGDE**
**Johan de Wittlaan 7**
**2517 JR Den Haag (NL)**

(54) **METHOD AND APPARATUS FOR FORMING UPLINK BURST PULSES IN A COMMUNICATION SYSTEM**

(57)    The present disclosure provides a method for forming an uplink burst pulse in a communication system, including: a code channel weighting coefficient for each uplink code channel is configured, wherein the code channel weighting coefficient contains a weighting coefficient of at least one modulation mode; a data modulation symbol on each uplink code channel is weighted with the weighting coefficient corresponding to its modulation mode, to obtain a weighted data modulation symbol on each uplink code channel; the weighted data modulation symbol on each uplink code channel is accumulated, and a total uplink transmission power for an accumulation value of the weighted data modulation symbol is configured after performing pre-transmission processing for the accumulation value. Accordingly, the present disclosure provides an apparatus for forming an uplink burst pulse in a communication system, which includes a weighted data modulation symbol obtaining unit, a weighted data modulation symbol accumulation unit, a pre-transmission processing unit and a total uplink transmission power configuration unit. The present disclosure enables the forming of the uplink burst pulse supporting the high-order modulation with high peak-to-average ratio at a low cost.

Fig. 4

## Description

## Technical field

The present disclosure relates to the field of communications, particularly to a method and an apparatus for forming an uplink burst pulse in a communication system.

## Background

TD-SCDMA is one of the three major international standards for 3G mobile communication. It was put forth by China. Its advancement mainly rests with the following aspects:

1) The receiver may use advanced joint detection techniques to reduce inter-user/co-channel interference, improve the quality of terminal users and enlarge system capacity;

2) When TDD (Time Division Duplex) is adopted, uplink and downlink work at a same frequency point. In this way, without the channel quality feedback information from the UE side, NodeB side can obtain downlink channel quality through uplink channel detection, thereby providing facility for the realization of smart antenna;

3) Uplink and downlink physical resources are allocated flexibly. Uplink and downlink resources may be allocated asymmetrically based on the uplink and downlink traffic to utilize the precious spectrum resource in a most effective way.

The user multiple access of TD-SCDMA system comprehensively considers Code Division Multiple Access (CDMA), Time Division Multiple Access (TDMA) and Frequency Division Multiple Access (FDMA). The physical resources are also divided into three levels: code channel, time slot and frequency band. The wireless channel bandwidth of a TD-SCDMA is 1.6MHz; on each 1.6MHz carrier frequency, 7 normal time slots (TSO ~ TS6) and 3 special time slots (downlink pilot time slot, guard period time slot and uplink pilot time slot) are divided out; on each normal time slot, there may be 16 orthogonal code channels with spread spectrum length of 16 (or 8, 4, 2 or 1 code channel with corresponding spread spectrum length of 8, 4, 2 or 1). Generally, a code channel with spread spectrum length of 16 is called as a basic resource unit (RU).
According to 3GPP standard [TS25.223], in an uplink time slot, TD-SCDMA terminal may carry data with two code channels with different spread spectrum length. These two code channels may either belong to a same CCTrCH (Coded Composite Transport Channel) or to two different CCTrCHs.
In the 3G system, in order to realize increase of signalling rate and other more excellent performances, High Speed Packet Access plus (HSPA+) and other related technologies are introduced. This calls for supporting high-order modulation. High-order modulation brings higher signal peak-to-average ratio, but it requires that uplink burst pulses have higher bit resolution (BR). In the prior art, DAC resolution of analog baseband (ABB) is adopted typically. However, with the increase of DAC resolution, cost is raised accordingly.

## Summary

In view of the foregoing background, the present disclosure provides a method and an apparatus for forming an uplink burst pulse in a communication system, which can support the high-order modulation with higher peak-to-average ratio without raising DAC resolution.
To solve the foregoing technical problem, the present disclosure adopts the following technical solution.
A method for forming an uplink burst pulse in a communication system having at least one uplink code channel includes:

a code channel weighting coefficient for each uplink code channel is configured, wherein the code channel weighting coefficient contains a weighting coefficient of at least one modulation mode;

a data modulation symbol on each uplink code channel is weighted with the weighting coefficient corresponding to its modulation mode, to obtain a weighted data modulation symbol on each uplink code channel;

the weighted data modulation symbol on each uplink code channel is accumulated, and a total uplink transmission power for an accumulation value of the weighted data modulation symbol is configured after performing pre-transmission processing for the accumulation value.

The modulation mode may be QPSK modulation, 16QAM modulation or 64QAM modulation.

When there is only one uplink code channel, the weighting coefficient to which the modulation mode corresponds may be: a rounding of a product of a code channel resolution and its corresponding energy normalization weight.

When there are two uplink code channels, the weighting coefficient to which the modulation mode corresponds may be: a rounding of a product of a code channel resolution, its corresponding energy normalization weight and a normalization factor of an intermediate calculation value of the code channel weighting coefficient on the code channel.

The normalization factor of the intermediate calculation value of the code channel weighting coefficient may be calculated based on $\beta$ and $\gamma$,

on the two code channels, the normalization factors of the intermediate calculation values of the code channel weighting coefficients may be: $\sqrt{|\alpha_1|^2 \Big/ \left(|\alpha_1|^2 + |\alpha_2|^2\right)}$ and $\sqrt{|\alpha_2|^2 \Big/ \left(|\alpha_1|^2 + |\alpha_2|^2\right)}$ respectively; where $\alpha_1$, $\alpha_2$ are the respective

intermediate calculation values of the code channel weighting coefficients on the two code channels; when transmission powers of the two code channels are equal, $\alpha_1$, $\alpha_2$ may be products of $\beta$ and $\gamma$ on the respective code channels; when the transmission powers of the two code channels are unequal, the intermediate calculation value of the code channel weighting coefficient on the code channel having a greater transmission power may be a product of the corresponding $\beta$ and $\gamma$, the intermediate calculation value of the code channel weighting coefficient on the code channel having a smaller transmission power may be a value obtained by correcting a product of the corresponding $\beta$ and $\gamma$ with a power difference correction factor.

The method may further include: before the weighting coefficient of the modulation mode is rounded, the weighting coefficient is adjusted with a limit saturation factor.

The total uplink transmission power may be calculated by the following method:

when there are two code channels, $P = 10 \cdot \log_{10}\left(10^{\frac{P_1}{10}} + 10^{\frac{P_2}{10}}\right) + P^2_{Normal}$ ;

when there is one code channel, $P = P_1 + P^1_{Normal}$ ;    where P is the total uplink transmission power; when there is one code channel, P1 is transmission power of the code channel, and $P^1_{Normal}$ is link normalization power bias when there is one code channel; when there are two code channels, P1 and P2 are transmission powers of the two code channels respectively, and $P^2_{Normal}$ is link normalization power bias when there are two code channels.

The total uplink transmission power may be calculated by a polygon method or a table lookup method.

An apparatus for forming an uplink burst pulse in a communication system includes: a weighted data modulation symbol obtaining unit, a weighted data modulation symbol accumulation unit, a pre-transmission processing unit and a total uplink transmission power configuration unit; wherein the weighted data modulation symbol obtaining unit is for configuring a code channel weighting coefficient for each uplink code channel, wherein the code channel weighting coefficient contains a weighting coefficient of at least one modulation mode, and for weighting a data modulation symbol on each uplink code channel with the weighting coefficient corresponding to its modulation mode, to obtain a weighted data modulation symbol on each uplink code channel; the weighted data modulation symbol accumulation unit is for accumulating the weighted data modulation symbol on each uplink code channel; the pre-transmission processing unit is for performing pre-transmission processing for an accumulation value of the weighted data modulation symbols; the total uplink transmission power configuration unit is for configuring a total uplink transmission power for the accumulation value of the weighted data modulation symbols after the pre-transmission processing of the accumulation value.

The modulation mode may include QPSK modulation, 16QAM modulation and 64QAM modulation.

By setting a code channel weighting coefficient for each uplink code channel, weighting the data modulation symbol on each uplink code channel with the weighting coefficient corresponding to its modulation mode and accumulating the weighted data modulation symbol on each uplink code channel, the present disclosure ultimately obtains an uplink burst pulse. Therefore, the present disclosure can support high-order modulation (for example, QPSK, 16QAM and 64QAM) with high peak-to-average ratio without raising DAC resolution, thereby forming, at a low cost, the uplink burst pulse that can support HSPA+ and other functions.

**Brief description of the drawings**

Fig. 1 is a schematic view of the structure of a normal time slot in TD-SCDMA;

Fig. 2 is a schematic block diagram of the formation of an uplink burst pulse in the standard;

Fig. 3 is a schematic block diagram of the formation of an uplink burst pulse in an embodiment of the present disclosure;

Fig. 4 is a schematic view of the formation of the weighting coefficients of modulation modes and the formation of total uplink transmission power in an embodiment of the present disclosure.

**Detailed description**

The present disclosure will now be described with reference to the accompanying drawings in combination with the embodiments.
Below TD-SCDMA communication system is taken for example (likewise, the present disclosure may also be applied in WCDMA and other 3G communication systems). In TD-SCDMA uplink time slot burst, there may be a plurality of code channels. In addition, different modulation modes, uplink power control, spread spectrum gain and different transport format combinations (TFC) need to be considered, too.
Generally, in High Speed Uplink Packet Access (HSUPA) or HSPA+, the modulation mode that may be adopted is QPSK, 16QAM or 64QAM. From the perspective of digital baseband, the peak-to-average ratios to which these three modulation modes correspond are 0dB 2.55dB and 3.68dB respectively. That is to say, with the increase of the order of the modulation mode, the peak-to-average ratio of the signal increases, too.
Further, in every communication system adopting CDMA system, after the modulation mode is fixed, peak-to-average ratio will increase with the increase of the number of user's code channels. For example, in a TD-SCDMA system, a time slot may bear 16 code channels at most, and the accumulated peak-to-average ratio of the signals on 16 code channels is 12dB higher, compared to a single code channel.
Considering the foregoing influence of code channel quantity and modulation mode on peak-to-average ratio, the prior art adopts the method of raising DAC resolution of ABB. The inventive concept of the present disclosure is that: radio frequency and baseband are integrated, and multiple uplink code channels, modulation mode, power difference, spread spectrum gain and other factors are considered in a unified way, thereby a method for forming an uplink burst pulse at a low cost may be realized without raising DAC bit width (resolution) of the analog baseband.

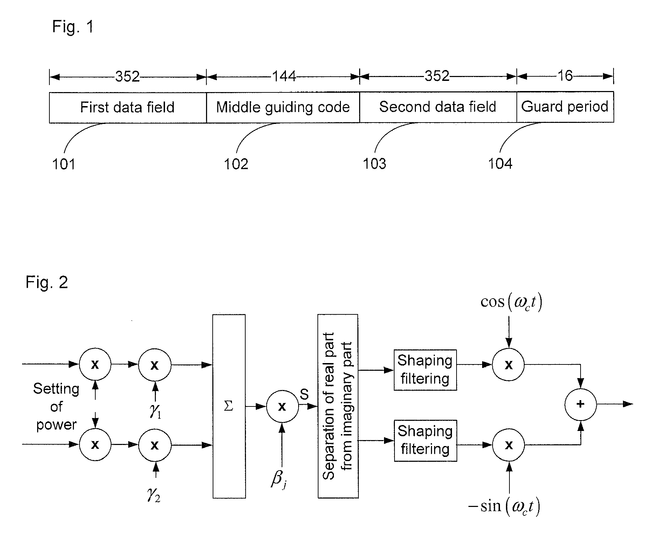

Fig. 1 is a schematic view of the structure of a normal time slot in TD-SCDMA. As shown in Fig. 1, in a TD-SCDMA system, regardless of uplink or downlink, the structure of a normal time slot consists of two data sections (i.e. the first data field 101, the second data field 103), a middle guiding code 102 and a guard period 104. The first data field 101, the middle guiding code 102, the second data field 103 and the guard period 104 occupy 352, 144, 352 and 16 chips, respectively.
According to 3GPP standard [TS25.223], the formation process of an uplink burst pulse in the prior art is as shown in Fig. 2. Taking two uplink code channels for example, firstly, code channel transmission powers for the two code channels are set respectively, then the set code channel transmission powers are multiplied by respective $\gamma$, then the symbol values of the two code channels are accumulated, then an accumulated symbol value is multiplied by $\beta$ to get a complex value code, real part is separated from imaginary part, shaping filtering and I/Q orthogonal processing is performed, and finally the formed uplink burst pulse is transmitted. $\gamma$ and $\beta$ here are defined in Section 6 of 3GPP standard [TS25.223] and are well known to those skilled in the art. $\gamma$ is decided by the spread spectrum gain of the code channel and $\beta$ is decided by TFC. The enquiry form of $\gamma$ may be as shown in Table 1:

Table 1

| SF of DPCHi | $\gamma i$ | dB |
|---|---|---|
| 16 | 1/4 | -12 |
| 8 | $\sqrt{2}/4$ | -9 |
| 4 | 1/2 | -6 |

(continued)

| SF of DPCHi | $\gamma i$ | dB |
|---|---|---|
| 2 | $\sqrt{2}/2$ | -3 |
| 1 | 1 | 0 |

The enquiry form of β may be as shown in Table 2:

Table 2

| Signalling value for $\beta j$ | Quantized value $\beta j$ | dB |
|---|---|---|
| 15 | 16/8 | 6.0 |
| 14 | 15/8 | 5.5 |
| 13 | 14/8 | 4.9 |
| 12 | 13/8 | 4.2 |
| 11 | 12/8 | 3.5 |
| 10 | 11/8 | 2.8 |
| 9 | 10/8 | 1.9 |
| 8 | 9/8 | 1.0 |
| 7 | 8/8 | 0 |
| 6 | 7/8 | -1.2 |
| 5 | 6/8 | -2.5 |
| 4 | 5/8 | -4.1 |
| 3 | 4/8 | -6.0 |
| 2 | 3/8 | -8.5 |
| 1 | 2/8 | -12.0 |
| 0 | 1/8 | -18.1 |

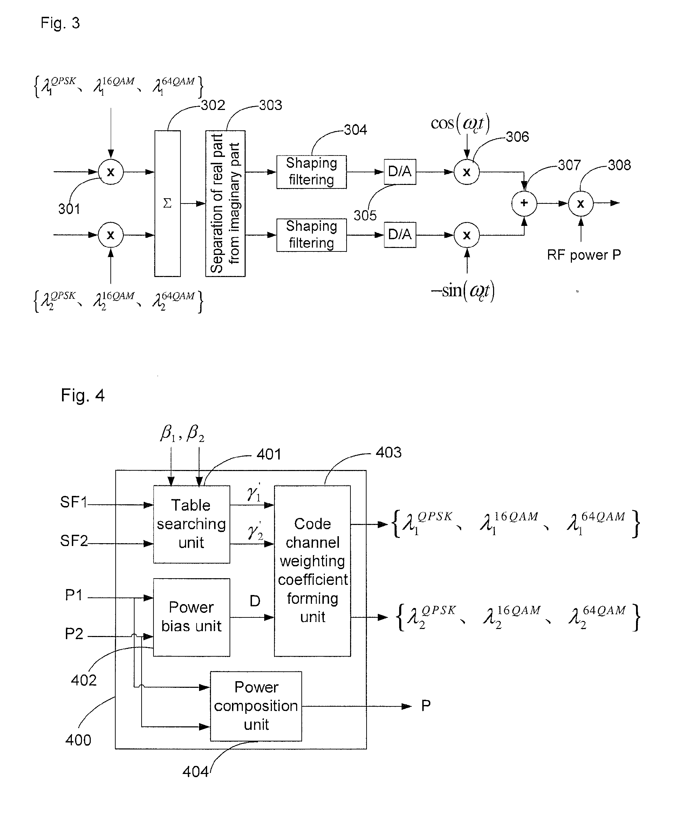

In the embodiment of the present disclosure, the block diagram of the formation of an uplink burst pulse is as shown in Fig. 3. Likewise, two uplink code channels are taken for example. At least one modulation mode is applied on each uplink code channel. For easy description, the two uplink code channels are named the first code channel and the second code channel, the related parameters of the first code channel are identified with subscript "1" and the related parameters of the second code channel are identified with subscript "2". It should be noted that the method described in the embodiment of the present disclosure is also applicable to one code channel, or more code channels, and the two uplink code channels in this embodiment are just an example. A code channel weighting coefficient is configured for each code channel.

In this embodiment, QPSK, 16QAM and 64QAM modulation modes are used. Of course, according to the conception of the present disclosure, more modulation modes may be used, or only one modulation mode or two modulation modes are used. Accordingly, each modulation mode in a code channel has a corresponding weighting coefficient, i.e., $\lambda_1^{QPSK}$ is the weighting coefficient to which the data modulation symbol of QPSK modulation mode on the first code channel corresponds, $\lambda_1^{16QAM}$ is the weighting coefficient to which the data modulation symbol of 16QAM modulation mode on the first code channel corresponds, and $\lambda_1^{64QAM}$ is the weighting coefficient to which the data modulation symbol of 64QAM modulation mode on the first code channel corresponds; $\lambda_2^{QPSK}$、 $\lambda_2^{16QAM}$、 $\lambda_2^{64QAM}$ are the weighting coefficients to which the data modulation symbols of QPSK modulation mode, 16QAM modulation mode and 64QAM modulation mode on the second code channel correspond respectively.

When a signal code stream on each uplink code channel is modulated with the foregoing three modulation modes, a modulation symbol containing three modulation modes may be obtained. After that, the data modulation symbol on each uplink code channel is weighted with the weighting coefficients to which its modulation modes correspond, to obtain a weighted data modulation symbol on each uplink code channel.

In the accumulator 302, the weighted data modulation symbols on two uplink code channels are accumulated to obtain the accumulation value of the weighted data modulation symbols. This accumulation value is a complex value code chip.

Pre-transmission processing is performed for the complex value code chip. The pre-transmission processing includes in order: separation of real part from imaginary part 303, shaping filtering of real part and shaping filtering of imaginary part 304, D/A 305, I/Q orthogonal RF modulation 306 (real part and imaginary part are multiplied by cos(wct) and -sin(ωct) respectively) and I/Q addition 307.

After pre-transmission processing is performed, the accumulation value of the weighted data modulation symbols is multiplied by the total uplink transmission power P configured for it in the multiplier (RF power gain unit) 308, and then is transmitted.

As shown in Fig. 2, on the baseband, if the two uplink code channels belong to two different CCTrCH, and the transmission power of each CCTrCH is controlled independently, there will be two independent transmission powers, whereas only one power is transmitted from the user equipment (UE) in the end. In the method provided in the embodiment of the present disclosure, the transmission of total uplink transmission power is configured after the uplink baseband signal (accumulation value of weighted date modulation symbols) is ultimately formed, so it conveniently realizes the conversion from two transmission powers to a final composite transmission power.

From the formation of the foregoing uplink burst pulse, it may be seen that the key point is: how to obtain the weighting coefficients $\left\{ \lambda_1^{QPSK}、\ \lambda_1^{16QAM}、\ \lambda_1^{64QAM}、\ \lambda_2^{QPSK}、\ \lambda_2^{16QAM}、\ \lambda_2^{64QAM} \right\}$ to which the three modulation modes on two uplink code channels correspond, and the total uplink transmission power P.

In order to make full use of the bit width of DAC/ADC, firstly, QPSK, 16QAM and 64QAM fixed-point modulation modes are proposed. The concrete forms are shown in Table 3, Table 4 and Table 5 respectively:

Table 3

| Bit | Modulation symbol | | |
|---|---|---|---|
| $b_1b_2$ | Floating point | Fixed point (decimal) | Fixed point (4-bit hexadecimal complement) |
| 00 | +j | 0+7j | [0 7] |
| 01 | +1 | 7+0j | [7 0] |
| 10 | -1 | -7+0j | [9 0] |
| 11 | -j | 0-7j | [0 9] |

Table 4

| Bit | Modulation symbol | | |
|---|---|---|---|
| $b_1b_2b_3b_4$ | Floating point | Fixed point (decimal) | Fixed point (4-bit hexadecimal complement) real part and imaginary part |
| 0000 | $j\dfrac{1}{\sqrt{5}}$ | 0+2j | [0 2] |
| 0001 | $-\dfrac{1}{\sqrt{5}}+j\dfrac{2}{\sqrt{5}}$ | -2+4j | [144] |
| 0010 | $\dfrac{1}{\sqrt{5}}+j\dfrac{2}{\sqrt{5}}$ | 2+4j | [2 4] |

(continued)

| Bit | Modulation symbol | | |
|---|---|---|---|
| $b_1b_2b_3b_4$ | Floating point | Fixed point (decimal) | Fixed point (4-bit hexadecimal complement) real part and imaginary part |
| 0011 | $j\dfrac{3}{\sqrt{5}}$ | 0+6j | [0 6] |
| 0100 | $\sqrt{\dfrac{1}{5}}$ | 2+0j | [2 0] |
| 0101 | $\dfrac{2}{\sqrt{5}}-j\dfrac{1}{\sqrt{5}}$ | 4-2j | [4 14] |
| 0110 | $\dfrac{2}{\sqrt{5}}+j\dfrac{1}{\sqrt{5}}$ | 4+2j | [4 2] |
| 0111 | $\dfrac{3}{\sqrt{5}}$ | 6+0j | [6 0] |
| 1000 | $-\dfrac{1}{\sqrt{5}}$ | -2+0j | [14 0] |
| 1001 | $-\dfrac{2}{\sqrt{5}}+j\dfrac{1}{\sqrt{5}}$ | -4+2j | [12 2] |
| 1010 | $-\dfrac{2}{\sqrt{5}}-j\dfrac{1}{\sqrt{5}}$ | -4-2j | [12 14] |
| 1011 | $-\dfrac{3}{\sqrt{5}}$ | -6 | [10 0] |
| 1100 | $-j\dfrac{1}{\sqrt{5}}$ | 0-2j | [0 14] |
| 1101 | $\dfrac{1}{\sqrt{5}}-j\dfrac{2}{\sqrt{5}}$ | 2-4j | [2 12] |
| 1110 | $-\dfrac{1}{\sqrt{5}}-j\dfrac{2}{\sqrt{5}}$ | -2-4j | [14 12] |
| 1111 | $-j\dfrac{3}{\sqrt{5}}$ | 0-6j | [0 10] |

Table 5

| Bit | Modulation symbol | | |
|---|---|---|---|
| $b_1b_2b_3b_4b_5b_6$ | Floating point | Fixed point (decimal) | Fixed point (4-bit hexadecimal complement) real part and imaginary part |
| 000000 | $j\dfrac{3}{\sqrt{21}}$ | 0+3j | [0 3] |
| 000001 | $\dfrac{1}{\sqrt{21}}+j\dfrac{2}{\sqrt{21}}$ | 1+2j | [1 2] |
| 000010 | $-\dfrac{1}{\sqrt{21}}+j\dfrac{2}{\sqrt{21}}$ | -1+2j | [15 2] |
| 000011 | $j\dfrac{1}{\sqrt{21}}$ | 0+1j | [0 1] |
| 000100 | $-\dfrac{1}{\sqrt{21}}+j\dfrac{4}{\sqrt{21}}$ | -1+4J | [15 4] |
| 000101 | $-\dfrac{2}{\sqrt{21}}+j\dfrac{5}{\sqrt{21}}$ | -2+5j | [14 5] |
| 000110 | $-\dfrac{2}{\sqrt{21}}+j\dfrac{3}{\sqrt{21}}$ | -2+3j | [14 3] |
| 000111 | $-\dfrac{3}{\sqrt{21}}+j\dfrac{4}{\sqrt{21}}$ | -3+4j | [13 4] |
| 001000 | $\dfrac{1}{\sqrt{21}}+j\dfrac{4}{\sqrt{21}}$ | 1+4j | [1 4] |
| 001001 | $\dfrac{2}{\sqrt{21}}+j\dfrac{3}{\sqrt{21}}$ | 2+3j | [2 3] |

(continued)

| Bit | Modulation symbol | | |
|---|---|---|---|
| $b_1b_2b_3b_4b_5b_6$ | Floating point | Fixed point (decimal) | Fixed point (4-bit hexadecimal complement) real part and imaginary part |
| 001010 | $\dfrac{2}{\sqrt{21}} + j\dfrac{5}{\sqrt{21}}$ | 2+5j | [2 5] |
| 001011 | $\dfrac{3}{\sqrt{21}} + j\dfrac{4}{\sqrt{21}}$ | 3+4j | [3 4] |
| 001100 | $j\dfrac{5}{\sqrt{21}}$ | 0+5j | [0 5] |
| 001101 | $-\dfrac{1}{\sqrt{21}} + j\dfrac{6}{\sqrt{21}}$ | -1+6j | [15 6] |
| 001110 | $\dfrac{1}{\sqrt{21}} + j\dfrac{6}{\sqrt{21}}$ | 1+6j | [1 6] |
| 001111 | $j\dfrac{7}{\sqrt{21}}$ | 0+7j | [0 7] |
| 010000 | $\dfrac{3}{\sqrt{21}}$ | 3+0j | [3 0] |
| 010001 | $\dfrac{2}{\sqrt{21}} + j\dfrac{1}{\sqrt{21}}$ | 2+1j | [2 1] |
| 010010 | $\dfrac{2}{\sqrt{21}} - j\dfrac{1}{\sqrt{21}}$ | 2-1j | [2 15] |
| 010011 | $\dfrac{1}{\sqrt{21}}$ | 1+0j | [1 0] |

(continued)

| Bit | Modulation symbol | | |
|---|---|---|---|
| $b_1b_2b_3b_4b_5b_6$ | Floating point | Fixed point (decimal) | Fixed point (4-bit hexadecimal complement) real part and imaginary part |
| 010100 | $\dfrac{4}{\sqrt{21}} - j\dfrac{1}{\sqrt{21}}$ | 4-1 j | [4 15] |
| 010101 | $\dfrac{5}{\sqrt{21}} - j\dfrac{2}{\sqrt{21}}$ | 5-2j | [5 14] |
| 010110 | $\dfrac{3}{\sqrt{21}} - j\dfrac{2}{\sqrt{21}}$ | 3-2j | [3 14] |
| 010111 | $\dfrac{4}{\sqrt{21}} - j\dfrac{3}{\sqrt{21}}$ | 4-3j | [4 13] |
| 011000 | $\dfrac{4}{\sqrt{21}} + j\dfrac{1}{\sqrt{21}}$ | 4+1j | [4 1] |
| 011001 | $\dfrac{3}{\sqrt{21}} + j\dfrac{2}{\sqrt{21}}$ | 3+2j | [3 2] |
| 011010 | $\dfrac{5}{\sqrt{21}} + j\dfrac{2}{\sqrt{21}}$ | 5+2j | [5 2] |
| 011011 | $\dfrac{4}{\sqrt{21}} + j\dfrac{3}{\sqrt{21}}$ | 4+3j | [4 3] |
| 011100 | $\dfrac{5}{\sqrt{21}}$ | 5+0j | [5 0] |
| 011101 | $\dfrac{6}{\sqrt{21}} - j\dfrac{1}{\sqrt{21}}$ | 6-1j | [6 15] |

(continued)

| Bit | Modulation symbol | | |
|---|---|---|---|
| $b_1b_2b_3b_4b_5b_6$ | Floating point | Fixed point (decimal) | Fixed point (4-bit hexadecimal complement) real part and imaginary part |
| 011110 | $\dfrac{6}{\sqrt{21}} + j\dfrac{1}{\sqrt{21}}$ | 6+1j | [6 1] |
| 011111 | $\dfrac{7}{\sqrt{21}}$ | 7+0j | [7 0] |
| 100000 | $-\dfrac{3}{\sqrt{21}}$ | -3+0j | [13 0] |
| 100001 | $-\dfrac{2}{\sqrt{21}} - j\dfrac{1}{\sqrt{21}}$ | -2-1j | [14 15] |
| 100010 | $-\dfrac{2}{\sqrt{21}} + j\dfrac{1}{\sqrt{21}}$ | -2+1j | [14 1] |
| 100011 | $-\dfrac{1}{\sqrt{21}}$ | -1+0j | [15 0] |
| 100100 | $-\dfrac{4}{\sqrt{21}} + j\dfrac{1}{\sqrt{21}}$ | -4+1j | [12 1] |
| 100101 | $-\dfrac{5}{\sqrt{21}} + j\dfrac{2}{\sqrt{21}}$ | -5+2j | [11 2] |
| 100110 | $-\dfrac{3}{\sqrt{21}} + j\dfrac{2}{\sqrt{21}}$ | -3+2j | [13 2] |
| 100111 | $-\dfrac{4}{\sqrt{21}} + j\dfrac{3}{\sqrt{21}}$ | -4+3j | [12 3] |

(continued)

| Bit | Modulation symbol | | |
|---|---|---|---|
| $b_1b_2b_3b_4b_5b_6$ | Floating point | Fixed point (decimal) | Fixed point (4-bit hexadecimal complement) real part and imaginary part |
| 101000 | $-\dfrac{4}{\sqrt{21}} - j\dfrac{1}{\sqrt{21}}$ | -4-1j | [12 15] |
| 101001 | $-\dfrac{3}{\sqrt{21}} - j\dfrac{2}{\sqrt{21}}$ | -3-2j | [13 14] |
| 101010 | $-\dfrac{5}{\sqrt{21}} - j\dfrac{2}{\sqrt{21}}$ | -5-2j | [11 14] |
| 101011 | $-\dfrac{4}{\sqrt{21}} - j\dfrac{3}{\sqrt{21}}$ | -4-3j | [12 13] |
| 101100 | $-\dfrac{5}{\sqrt{21}}$ | -5+0j | [11 0] |
| 101101 | $-\dfrac{6}{\sqrt{21}} + j\dfrac{1}{\sqrt{21}}$ | -6+1j | [10 1] |
| 101110 | $-\dfrac{6}{\sqrt{21}} - j\dfrac{1}{\sqrt{21}}$ | -6-1j | [10 15] |
| 101111 | $-\dfrac{7}{\sqrt{21}}$ | -7+0j | [9 0] |
| 110000 | $-j\dfrac{3}{\sqrt{21}}$ | 0-3j | [0 13] |
| 110001 | $-\dfrac{1}{\sqrt{21}} - j\dfrac{2}{\sqrt{21}}$ | -1-2j | [15 14] |

(continued)

| Bit | Modulation symbol | | |
|---|---|---|---|
| $b_1b_2b_3b_4b_5b_6$ | Floating point | Fixed point (decimal) | Fixed point (4-bit hexadecimal complement) real part and imaginary part |
| 110010 | $\dfrac{1}{\sqrt{21}} - j\dfrac{2}{\sqrt{21}}$ | 1-2j | [1 14] |
| 110011 | $-j\dfrac{1}{\sqrt{21}}$ | 0-1j | [0 15] |
| 110100 | $\dfrac{1}{\sqrt{21}} - j\dfrac{4}{\sqrt{21}}$ | 1-4j | [1 12] |
| 110101 | $\dfrac{2}{\sqrt{21}} - j\dfrac{5}{\sqrt{21}}$ | 2-5j | [2 11] |
| 110110 | $\dfrac{2}{\sqrt{21}} - j\dfrac{3}{\sqrt{21}}$ | 2-3j | [2 13] |
| 110111 | $\dfrac{3}{\sqrt{21}} - j\dfrac{4}{\sqrt{21}}$ | 3-4j | [3 12] |
| 111000 | $-\dfrac{1}{\sqrt{21}} - j\dfrac{4}{\sqrt{21}}$ | -1-4j | [15 12] |
| 111001 | $-\dfrac{2}{\sqrt{21}} - j\dfrac{3}{\sqrt{21}}$ | -2-3j | [14 13] |
| 111010 | $-\dfrac{2}{\sqrt{21}} - j\dfrac{5}{\sqrt{21}}$ | -2-5j | [14 11] |
| 111011 | $-\dfrac{3}{\sqrt{21}} - j\dfrac{4}{\sqrt{21}}$ | -3-4j | [13 12] |

(continued)

| Bit | Modulation symbol | | |
|---|---|---|---|
| $b_1b_2b_3b_4b_5b_6$ | Floating point | Fixed point (decimal) | Fixed point (4-bit hexadecimal complement) real part and imaginary part |
| 111100 | $-j\dfrac{5}{\sqrt{21}}$ | 0-5j | [0 11] |
| 111101 | $\dfrac{1}{\sqrt{21}}-j\dfrac{6}{\sqrt{21}}$ | 1-6j | [1 10] |
| 111110 | $-\dfrac{1}{\sqrt{21}}-j\dfrac{6}{\sqrt{21}}$ | -1-6j | [15 10] |
| 111111 | $-j\dfrac{7}{\sqrt{21}}$ | 0-7j | [0 9] |

In the foregoing modulation process, if the 64QAM modulation process is considered as normalization based on 4-bit resolution, i.e., the weight of 64QAM is 1, then after powers of the fixed-point modulation symbols in Table 3, Table 4 and Table 5 are averaged, it may be obtained that the power average of QPSK, 16QAM and 64QAM is $\sqrt{49}$, $\sqrt{20}$ and $\sqrt{21}$, respectively. As the weight of 64QAM is 1, accordingly, weighting with $\sqrt{21/49}$ is needed on QPSK modulation symbols and weighting with $\sqrt{21/20}$ is needed on 16QAM modulation symbols. Through such weights, the three modulation modes may be evened up in energy. Accordingly, the three weights $\sqrt{21/49}$, $\sqrt{21/20}$, 1 of QPSK, 16QAM and 64QAM modulation modes are the energy normalization weights of the three modulation modes respectively. The energy normalization weights $\sqrt{21/49}$, $\sqrt{21/20}$ and 1 will be complexed to code channel weighting coefficients $\left\{\lambda_1^{QPSK}、\ \lambda_1^{16QAM}、\ \lambda_1^{64QAM}、\ \lambda_2^{QPSK}、\ \lambda_2^{16QAM}、\ \lambda_2^{64QAM}\right\}$ (refer to the text below).

Fig. 4 is a schematic view of the formation of the weighting coefficients of modulation modes and the formation of total uplink transmission power in an embodiment of the present disclosure. As shown in Fig. 4, $\left\{\lambda_1^{QPSK}、\ \lambda_1^{16QAM}、\ \lambda_1^{64QAM}、\ \lambda_2^{QPSK}、\ \lambda_2^{16QAM}、\ \lambda_2^{64QAM}\right\}$ and total uplink transmission power P are obtained from the code channel power proportioning module 400 as shown in the diagram.

The code channel power proportioning module 400 comprises a table searching unit 401, a power bias unit 402, a code channel weighting coefficient forming unit 403 and a power composition unit 404. The six inlet parameters of the code channel power proportioning module 400 are SF1, SF2, P1, P2, $\beta_1$ and $\beta_2$, wherein SF1 and SF2 are the respective spread spectrum length of two uplink code channels, i.e., the first code channel and the second code channel, and their possible values are 16, 8, 4, 2, 1. P1 and P2 are the uplink transmission powers to which the first code channel and the second code channel correspond respectively and are decided and maintained by uplink power control; $\beta_1$, $\beta_2$ are $\beta$ decided by TFC as described in Table 2.

The code channel power proportioning module 400 has 7 outlet parameters. They are the weighting coefficients $\left\{\lambda_1^{QPSK}、\ \lambda_1^{16QAM}、\ \lambda_1^{64QAM}\right\}$ of the three modulation modes on the first code channel, the weighting coefficients $\left\{\lambda_2^{QPSK}、\ \lambda_2^{16QAM}、\ \lambda_2^{64QAM}\right\}$ of the three modulation modes on the second code channel, and the total uplink transmission power P. Among them, $\left\{\lambda_1^{QPSK}、\ \lambda_1^{16QAM}、\ \lambda_1^{64QAM}\right\}$ stand for the coefficients for weighting of the corresponding modulation symbols if QPSK, 16QAM or 64QAM modulation exists on the first channel; $\left\{\lambda_2^{QPSK}、\ \lambda_2^{16QAM}、\ \lambda_2^{64QAM}\right\}$

stand for the coefficients for weighting of the corresponding modulation symbols on the second code channel; the total uplink transmission power P stands for the power ultimately transmitted from RF.

The table searching unit 401 realizes $\gamma_1$, $\gamma_2$ table searching operation based on the spread spectrum length SF1 and SF2 of the two code channels, and performs table searching operation of Table 2 based on $\beta_1$, $\beta_2$ configured by TFC. Here it should be noted that:

If the two code channels belong to a same CCTrCH, then $\beta_1$, $\beta_2$ to which they correspond will be equal; if the two code channels belong to two different CCTrCHs, $\beta_1$, $\beta_2$ may be unequal;

If uplink has only one code channel (of course, in this case, there may be one CCTrCH only), then the corresponding $\gamma_2$, $\beta_2$ will not exist and attention needs to be paid to $\gamma_1$, $\beta_1$ only.

After $\gamma_1$, $\gamma_2$ and $\beta_1$, $\beta_2$ are obtained, the table searching unit 401 reconstructs coefficients $\gamma_1'$, $\gamma_2'$:

When uplink has only one code channel:

$$\begin{cases} \gamma_1' = \beta_1 \times \gamma_1 \\ \gamma_2' = 0 \end{cases}$$

When the two uplink code channels belong to a same CCTrCH ($\beta_1 = \beta_2$):

$$\begin{cases} \gamma_1' = \beta_1 \times \gamma_1 \\ \gamma_2' = \beta_1 \times \gamma_2 \end{cases}$$

When the two code channels belong to two different CCTrCHs:

$$\begin{cases} \gamma_1' = \beta_1 \times \gamma_1 \\ \gamma_2' = \beta_2 \times \gamma_2 \end{cases}$$

The power bias unit 402 executes transmission power difference calculation of the two code channels. The transmission power difference is expressed by $\Delta$. When the two code channels belong to a CCTrCH, the transmission powers configured for the two code channels are equal, i.e. $\Delta=0$; if the two are unequal, then

$$\Delta = \begin{cases} P_1 - P_2 & \text{when } P_1 \le P_2 \\ P_2 - P_1 & \text{when } P_1 > P_2 \end{cases}$$

In the code channel weighting coefficient forming unit 403, $\gamma_1'$, $\gamma_2'$ are reprocessed at first, to obtain the intermediate calculation values $\alpha_1$, $\alpha_2$ of code channel weighting coefficients on the two code channels respectively:

when $P_1 \ge P_2$, $\alpha_1 = \gamma_1'$, $\alpha_2 = \gamma_2' \times 10^{\frac{\Delta}{20}}$ ;

when $P_1 < P_2$, $\alpha_1 = \gamma_1' \times 10^{\frac{\Delta}{20}}$, $\alpha_2 = \gamma_2'$,

where $10^{\frac{\Delta}{20}}$ is power difference correction factor.

To summarize, when the transmission powers of the two code channels are equal, $\alpha_1$, $\alpha_2$ are the products of $\beta$ and $\gamma$ on the respective code channels; when the transmission powers of the two code channels are unequal, the intermediate calculation value of the code channel weighting coefficients on the code channel having a greater transmission power is still the product of the corresponding $\beta$ and $\gamma$, but the intermediate calculation value of the code channel weighting coefficients on the code channel having a smaller transmission power is a value obtained by correcting the product of the corresponding $\beta$ and $\gamma$ with the power difference correction factor.

After $\alpha_1$, $\alpha_2$ are obtained at first, the code channel weighting coefficient forming unit 403 further forms parameters

$$\left\{ \lambda_1^{QPSK} \text{、} \lambda_1^{16QAM} \text{、} \lambda_1^{64QAM} \right\} , \quad \left\{ \lambda_2^{QPSK} \text{、} \lambda_2^{16QAM} \text{、} \lambda_2^{64QAM} \right\} .$$

These parameters are expressed by unsigned 6-bit resolution for example. It is supposed that the bit width of uplink DAC is $L_{DAC}$, and the most common $L_{DAC} = 10$ is taken for example:

When uplink has only one code channel,

$$\lambda_1^{QPSK} = round\left( \sqrt{1/2} \times 2^{L_{DAC}-4} \times \sqrt{21/49} \right) = 30$$

$$\lambda_1^{16QAM} = round\left( \sqrt{1/2} \times 2^{L_{DAC}-4} \times \sqrt{21/20} \right) = 46$$

$$\lambda_1^{64QAM} = round\left( \sqrt{1/2} \times 2^{L_{DAC}-4} \times 1 \right) = 45$$

And

$$\lambda_2^{QPSK} = 0$$

$$\lambda_2^{16QAM} = 0$$

$$\lambda_2^{64QAM} = 0$$

where $2^{L_{DAC}-4}$ is code channel resolution. "4" in its exponent $L_{DAC}$-4 means 4 bits of margin is set aside from the coefficient for modulation symbols; $\sqrt{1/2}$ is limit saturation factor, which is a factor set to ensure no $L_{DAC}$ bits of saturation will happen when the modulation symbols of the two code channel are added; *round* (*x*) means *x* is rounded off; $\sqrt{21/49}$ , $\sqrt{21/20}$ and 1 are the energy normalization weights of the modulation modes as described above.

When uplink has two code channels:

$$\lambda_1^{QPSK} = round\left( \sqrt{1/2} \times 2^{L_{DAC}-4} \times \sqrt{21/49} \times \sqrt{|\alpha_1|^2 \Big/ \left(|\alpha_1|^2 + |\alpha_2|^2\right)} \right)$$

$$= round\left( 2^{5.5} \times \sqrt{21/49} \times \sqrt{|\alpha_1|^2 \Big/ \left(|\alpha_1|^2 + |\alpha_2|^2\right)} \right)$$

$$= round\left( 29.6262 \times \sqrt{|\alpha_1|^2 \Big/ \left(|\alpha_1|^2 + |\alpha_2|^2\right)} \right)$$

$$\lambda_1^{16QAM} = round\left( \sqrt{1/2} \times 2^{L_{DAC}-4} \times \sqrt{21/20} \times \sqrt{|\alpha_1|^2 \Big/ \left(|\alpha_1|^2 + |\alpha_2|^2\right)} \right)$$

$$= round\left( 2^{5.5} \times \sqrt{21/20} \times \sqrt{|\alpha_1|^2 \Big/ \left(|\alpha_1|^2 + |\alpha_2|^2\right)} \right)$$

$$= round\left( 46.3724 \times \sqrt{|\alpha_1|^2 \Big/ \left(|\alpha_1|^2 + |\alpha_2|^2\right)} \right)$$

$$\lambda_1^{64QAM} = round\left( \sqrt{1/2} \times 2^{L_{DAC}-4} \times 1 \times \sqrt{|\alpha_1|^2 \Big/ \left(|\alpha_1|^2 + |\alpha_2|^2\right)} \right)$$

$$= round\left( 2^{5.5} \times \sqrt{|\alpha_1|^2 \Big/ \left(|\alpha_1|^2 + |\alpha_2|^2\right)} \right)$$

$$= round\left( 45.2548 \times \sqrt{|\alpha_1|^2 \Big/ \left(|\alpha_1|^2 + |\alpha_2|^2\right)} \right)$$

And

$$\lambda_2^{QPSK} = round\left( \sqrt{1/2} \times 2^{L_{DAC}-4} \times \sqrt{21/49} \times \sqrt{|\alpha_2|^2 \Big/ \left(|\alpha_1|^2 + |\alpha_2|^2\right)} \right)$$

$$= round\left( 2^{5.5} \times \sqrt{21/49} \times \sqrt{|\alpha_2|^2 \Big/ \left(|\alpha_1|^2 + |\alpha_2|^2\right)} \right)$$

$$= round\left( 29.6262 \times \sqrt{|\alpha_2|^2 \Big/ \left(|\alpha_1|^2 + |\alpha_2|^2\right)} \right)$$

$$\lambda_2^{16QAM} = round\left( \sqrt{1/2} \times 2^{L_{DAC}-4} \times \sqrt{21/20} \times \sqrt{|\alpha_2|^2 \Big/ \left(|\alpha_1|^2 + |\alpha_2|^2\right)} \right)$$

$$= round\left( 2^{5.5} \times \sqrt{21/20} \times \sqrt{|\alpha_2|^2 \Big/ \left(|\alpha_1|^2 + |\alpha_2|^2\right)} \right)$$

$$= round\left( 46.3724 \times \sqrt{|\alpha_2|^2 \Big/ \left(|\alpha_1|^2 + |\alpha_2|^2\right)} \right)$$

$$\lambda_2^{64QAM} = round\left( \sqrt{1/2} \times 2^{L_{DAC}-4} \times 1 \times \sqrt{|\alpha_2|^2 \Big/ \left(|\alpha_1|^2 + |\alpha_2|^2\right)} \right)$$

$$= round\left( 2^{5.5} \times \sqrt{|\alpha_2|^2 \Big/ \left(|\alpha_1|^2 + |\alpha_2|^2\right)} \right)$$

$$= round\left( 45.2548 \times \sqrt{|\alpha_2|^2 \Big/ \left(|\alpha_1|^2 + |\alpha_2|^2\right)} \right)$$

where $\sqrt{|\alpha_1|^2 \Big/ \left(|\alpha_1|^2 + |\alpha_2|^2\right)}$, $\sqrt{|\alpha_2|^2 \Big/ \left(|\alpha_1|^2 + |\alpha_2|^2\right)}$ are the normalization factors of the intermediate calculation values of the code channel weighting coefficients on the first code channel and the second code channel respectively.

After these parameters are formed, the forming of uplink burst pulse is obtained in the following way:

$$\text{UL Burst=}$$
$$\left( \lambda_1^{QPSK} * DPCH1@QPSK + \lambda_1^{16QAM} * DPCH1@16QAM + \lambda_1^{64QAM} * DPCH1@64QAM \right)$$
$$+ \left( \lambda_2^{QPSK} * DPCH2@QPSK + \lambda_2^{16QAM} * DPCH2@16QAM + \lambda_2^{64QAM} * DPCH2@64QAM \right)$$

What formed here is an uplink baseband signal. Power amplification needs to be performed for the ultimate uplink burst, i.e., the real transmission power of the uplink burst pulse is realized through the RF power gain unit 308 as shown in Fig. 3.

In the formula, *DPCH*1@*QPSK* means that data modulation symbols on the first code channel *DPCH*1 whose modulation mode is QPSK, and *DPCH*1@16*QAM* and *DPCH*1@64*QAM* have similar meanings and mean that data modulation symbols on the first code channel whose modulation mode are 16QAM and 64QAM respectively; *DPCH*2@*QPSK*, *DPCH*2@16*QAM* and *DPCH*2@64*QAM* have similar meanings and mean that data modulation symbols on the second code channel whose modulation mode on the second code channel are QPSK, 16QAM and 64QAM respectively. After the data symbols on the two code channels are modulated and weighted, the two code channels are accumulated based on code chip to form an uplink burst. By now, the modulated data resolution is placed on the predetermined $L_{DAC}$ bit width.

During the foregoing modulation of one code channel or two code channels, coefficients $\left\{ \lambda_1^{QPSK}、\lambda_1^{16QAM}、\lambda_1^{64QAM} \right\}$ and $\left\{ \lambda_2^{QPSK}、\lambda_2^{16QAM}、\lambda_2^{64QAM} \right\}$ are both multiplied by limit saturation factor $\sqrt{1/2}$, for two purposes: preventing the coefficients from exceeding unsigned 6-bit resolution, and preventing I/Q in the burst pulse from exceeding resolution $L_{DAC}$ bits when the two uplink code channels are accumulated to form an uplink burst pulse and transmitted.

Total uplink transmission power P may be obtained in the power composition unit 404.

When there are two uplink CCTrCHs and two code channels, $P = 10 \cdot \log_{10}\left( 10^{\frac{P_1}{10}} + 10^{\frac{P_2}{10}} \right) + P_{Normal}^2$ ;

when there is one uplink CCTrCH and two code channels, $P_1 = P_2$, then $P = P_1 + 3dB + P_{Normal}^2$ is obtained;

when there is one uplink CCTrCH and one code channel, $P = P_1 + P_{Normal}^1$.

The unit of total uplink transmission power *P* is dB. $P_{Normal}$ is link normalization power bias, which is generally obtained through laboratory test. With respect to one code channel or two code channels, $P_{Normal}$ should be obtained through test separately.

In the above formula, $P_{Normal}$ is expressed with $P_{Normal}^1$ (one code channel) and $P_{Normal}^2$ (two code channels) respectively;

$$10 \cdot \log_{10}\left(10^{\frac{P_1}{10}} + 10^{\frac{P_2}{10}}\right)$$

$$= \max\left(P1, P2\right) + 10 * \log 10\left(1 + 10^{-\frac{|P2-P1|}{10}}\right)$$

$$= \max\left(P1, P2\right) + 10 * \log 10\left(1 + 10^{\frac{\Delta}{10}}\right)$$

where the transmission power difference $\Delta$ has been described above, which is smaller than or equal to 0, typically $10 * \log 10\left(1 + 10^{\frac{\Delta}{10}}\right)$ may be obtained by polygon method or table lookup method. Let's take polygon method for example:

$$10 * \log 10\left(1 + 10^{\frac{\Delta}{10}}\right) = \begin{cases} 0.4167 \times \Delta + 3.01, \text{when } -3 < \Delta \leq 0 \\ 0.2633 \times \Delta + 2.55, \text{when } -6 < \Delta \leq -3 \\ 0.14 \times \Delta + 1.81, \text{when } -10 < \Delta \leq -6 \\ 0.056 \times \Delta + 0.97, \text{when } -15 < \Delta \leq -10 \\ 0.0087 \times \Delta + 0.26, \text{when } -30 < \Delta \leq -15 \\ 0, \text{when } \Delta \leq -30 \end{cases}$$

An apparatus for forming an uplink burst pulse in an embodiment of the present disclosure comprises:

a weighted data modulation symbol obtaining unit, for configuring a code channel weighting coefficient for each uplink code channel, wherein the code channel weighting coefficient contains a weighting coefficient of at least one modulation mode; for weighting a data modulation symbol on each uplink code channel with the weighting coefficient corresponding to its modulation mode, to obtain a weighted data modulation symbol on each uplink code channel; a weighted data modulation symbol accumulation unit, for accumulating the weighted data modulation symbol on each uplink code channel;
a pre-transmission processing unit, for performing pre-transmission processing for the accumulation value of the weighted data modulation symbols;
a total uplink transmission power configuration unit, for configuring a total uplink transmission power for the accumulation value of the weighted data modulation symbols after pre-transmission processing of the accumulation value.

The present disclosure fully analyzes the influence of modulation mode, power difference, spread spectrum gain and other related factors through comprehensively considering RF and baseband. By setting code channel weighting coefficients and weighting the data modulation symbol on each uplink code channel, an uplink burst pulse is finally formed by weighted data modulation symbols, so as to raise signal's ability to tolerate high-order modulation with high peak-to-average ratio without raising DAC resolution. Therefore, the cost for forming the uplink burst pulse is lowered and the technical effect is good. Power configuration is placed to RF. Because the calculation of different transmission powers of a plurality of uplink code channel has been realized on the baseband, the power configuration of RF only needs to amplify power one time in a unified way, thus making the control flexible and simple.
The foregoing content is the detailed descriptions on the present disclosure in combination with preferred embodiments. They are just examples for easy understanding and should not be understood that the embodiments of the present disclosure are limited to these descriptions only. For those skilled in the art, the present disclosure may have various equivalent modifications or replacements without departing from the conception of the present disclosure. All the modifications or replacements shall be within the protection scope of the present disclosure.

**Claims**

1. A method for forming an uplink burst pulse in a communication system having at least one uplink code channel, comprising:

   configuring a code channel weighting coefficient for each uplink code channel, wherein the code channel weighting coefficient contains a weighting coefficient of at least one modulation mode;
   weighting a data modulation symbol on each uplink code channel with the weighting coefficient corresponding to its modulation mode, to obtain a weighted data modulation symbol on each uplink code channel;
   accumulating the weighted data modulation symbol on each uplink code channel, and configuring a total uplink transmission power for an accumulation value of the weighted data modulation symbol after performing pre-transmission processing for the accumulation value.

2. The method according to claim 1, wherein the modulation mode is QPSK modulation, 16QAM modulation or 64QAM modulation.

3. The method according to claim 2, wherein when there is only one uplink code channel, the weighting coefficient to which the modulation mode corresponds is: a rounding of a product of a code channel resolution and its corresponding energy normalization weight.

4. The method according to claim 2, wherein when there are two uplink code channels, the weighting coefficient to which the modulation mode corresponds is: a rounding of a product of a code channel resolution, its corresponding energy normalization weight and a normalization factor of an intermediate calculation value of the code channel weighting coefficient on the code channel.

5. The method according to claim 4, wherein the normalization factor of the intermediate calculation value of the code channel weighting coefficient is calculated based on $\beta$ and $\gamma$,
   on the two code channels, the normalization factors of the intermediate calculation values of the code channel weighting coefficients are: $\sqrt{\left|\alpha_1\right|^2 \Big/ \left(\left|\alpha_1\right|^2 + \left|\alpha_2\right|^2\right)}$ and $\sqrt{\left|\alpha_2\right|^2 \Big/ \left(\left|\alpha_1\right|^2 + \left|\alpha_2\right|^2\right)}$ respectively; where $\alpha_1$, $\alpha_2$ are

   the respective intermediate calculation values of the code channel weighting coefficients on the two code channels; when transmission powers of the two code channels are equal, $\alpha_1$, $\alpha_2$ are products of $\beta$ and $\gamma$ on the respective code channels; when the transmission powers of the two code channels are unequal, the intermediate calculation value of the code channel weighting coefficient on the code channel having a greater transmission power is a product of the corresponding $\beta$ and $\gamma$, the intermediate calculation value of the code channel weighting coefficient on the code channel having a smaller transmission power is a value obtained by correcting a product of the corresponding $\beta$ and $\gamma$ with a power difference correction factor.

6. The method according to any one of claims 3 to 5, further comprising: before the weighting coefficient of the modulation mode is rounded, adjusting the weighting coefficient with a limit saturation factor.

7. The method according to any one of claims 1 to 5, wherein the total uplink transmission power is calculated by the following method:

   when there are two code channels, $P = 10 \cdot \log_{10}\left(10^{\frac{P_1}{10}} + 10^{\frac{P_2}{10}}\right) + P^2_{Normal}$ ;

   when there is one code channel, $P = P_1 + P^1_{Normal}$ ; where P is the total uplink transmission power; when there is one code channel, P1 is transmission power of the code channel, and $P^1_{Normal}$ is link normalization power bias when there is one code channel; when there are two code channels, P1 and P2 are transmission powers of the two code channels respectively, and $P^2_{Normal}$ is link normalization power bias when there are two code channels.

8. The method according to claim 7, wherein the total uplink transmission power is calculated by a polygon method or a table lookup method.

9. An apparatus for forming an uplink burst pulse in a communication system, comprising: a weighted data modulation symbol obtaining unit, a weighted data modulation symbol accumulation unit, a pre-transmission processing unit and a total uplink transmission power configuration unit; wherein
the weighted data modulation symbol obtaining unit is for configuring a code channel weighting coefficient for each uplink code channel, wherein the code channel weighting coefficient contains a weighting coefficient of at least one modulation mode, and for weighting a data modulation symbol on each uplink code channel with the weighting coefficient corresponding to its modulation mode, to obtain a weighted data modulation symbol on each uplink code channel;
the weighted data modulation symbol accumulation unit is for accumulating the weighted data modulation symbol on each uplink code channel;
the pre-transmission processing unit is for performing pre-transmission processing for an accumulation value of the weighted data modulation symbols;
the total uplink transmission power configuration unit is for configuring a total uplink transmission power for the accumulation value of the weighted data modulation symbols after the pre-transmission processing of the accumulation value.

10. The apparatus according to claim 9, wherein the modulation mode includes QPSK modulation, 16QAM modulation and 64QAM modulation.

Fig. 1

| ⟵————352————⟶ | ⟵————144————⟶ | ⟵————352————⟶ | ⟵—16—⟶ |
|---|---|---|---|
| First data field | Middle guiding code | Second data field | Guard period |

101                    102                    103                    104

Fig. 2

Fig. 3

$\left\{ \lambda_1^{QPSK} 、 \lambda_1^{16QAM} 、 \lambda_1^{64QAM} \right\}$

Fig. 4

$\beta_1 , \beta_2$

# INTERNATIONAL SEARCH REPORT

| International application No. |
|---|
| PCT/CN2010/071999 |

**A. CLASSIFICATION OF SUBJECT MATTER**

H04L25/00 (2006.01) i

According to International Patent Classification (IPC) or to both national classification and IPC

**B. FIELDS SEARCHED**

Minimum documentation searched (classification system followed by classification symbols)

IPC: H04L H04W H04Q

Documentation searched other than minimum documentation to the extent that such documents are included in the fields searched

Electronic data base consulted during the international search (name of data base and, where practicable, search terms used)

CNKI, CPRSABS,WPI, EPODOC, NPL: burst, weight, modulate, high order modulation, crest factor, cf, peak to average ratio, par, peak to average power ratio, papr, high speed packet access, hspa, high speed uplink packet access, hsupa

**C. DOCUMENTS CONSIDERED TO BE RELEVANT**

| Category* | Citation of document, with indication, where appropriate, of the relevant passages | Relevant to claim No. |
|---|---|---|
| A | 3GPP TS 25.223 V8.4.0, 3rd Generation Partnership Project; Technical Specification Group Radio Access Network; Spreading and modulation (TDD) (Release 8), 08 June 2009 (08.06.2009) The whole document | 1-10 |
| A | CN1568586A (QUALCOMM INC)19 Jan. 2005 (19.01.2005) The whole document | 1-10 |
| A | CN101510791A (BEIJING T3G TECHNOLOGY CO LTD) 19 Aug. 2009 (19.08.2009) The whole document | 1-10 |
| A | CN1493129A (SAMSUNG ELECTRONICS CO LTD) 28 April 2004 (28.04.2004) The whole document | 1-10 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 July 2010 (01.07.2010) | **22 Jul. 2010 (22.07.2010)** |

| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>CHEN Qiong<br>Telephone No. (86-10)62411232 |
|---|---|

Form PCT/ISA /210 (second sheet) (July 2009)

## INTERNATIONAL SEARCH REPORT
### Information on patent family members

| | International application No. |
|---|---|
| | PCT/CN2010/071999 |

| Patent Documents referred in the Report | Publication Date | Patent Family | Publication Date |
|---|---|---|---|
| CN1568586A | 19.01.2005 | WO02093779A2 | 21.11.2002 |
| | | US2003048856A1 | 13.03.2003 |
| | | EP1389366A2 | 18.02.2004 |
| | | KR20030094420A | 11.12.2003 |
| | | AU2002259221A1 | 25.11.2002 |
| | | TW576032A | 11.02.2004 |
| | | BR0209640A | 31.08.2004 |
| | | JP2004535105T | 18.11.2004 |
| | | AU2002259221A8 | 06.10.2005 |
| | | JP2009081873A | 16.04.2009 |
| | | EP2053773A1 | 29.04.2009 |
| | | KR20090058595A | 09.06.2009 |
| | | KR100919082B1 | 28.09.2009 |
| | | US2010074351A1 | 25.03.2010 |
| | | US7688899B2 | 30.03.2010 |
| | | US2010104039A1 | 29.04.2010 |
| | | KR100942646B1 | 17.02.2010 |
| CN101510791A | 19.08.2009 | None | |
| CN1493129A | 28.04.2004 | EP1313249A2 | 21.05.2003 |
| | | US2003103585A1 | 05.06.2003 |
| | | WO03045002A1 | 30.05.2003 |
| | | KR20030041196A | 27.05.2003 |
| | | AU2002353620A1 | 10.06.2003 |
| | | AU2002353620B2 | 13.01.2005 |
| | | JP2005510177T | 14.04.2005 |
| | | INDELNP200301095E | 03.06.2005 |
| | | KR100566241B1 | 29.03.2006 |
| | | US7302012B2 | 27.11.2007 |
| | | JP4046692B2 | 13.02.2008 |
| | | IN211377B | 09.11.2007 |
| | | CN100499447C | 10.06.2009 |

Form PCT/ISA /210 (patent family annex) (July 2009)